# EUROPÄISCHE PATENTSCHRIFT

(11) **EP 2 588 553 B1**
(45) Veröffentlichungstag und Bekanntmachung des Hinweises auf die Patenterteilung: **19.08.2015**
(21) Anmeldenummer: 11729602.0
(22) Anmeldetag: 24.06.2011
(51) Int. Cl.: C08J 3/07, C08J 5/04, C08J 5/12

(54) **BLOCKCOPOLYMERE IN KLEBSTOFFDISPERSIONEN**
BLOCK COPOLYMERS IN ADHESIVE DISPERSIONS
COPOLYMÈRES À BLOCS DANS DES DISPERSIONS D'ADHÉSIFS

(30) Priorität: 30.06.2010 DE 102010030699
(43) Veröffentlichungstag der Anmeldung: 08.05.2013
(73) Patentinhaber: Henkel AG & Co. KGaA, 40589 Düsseldorf (DE)
(72) Erfinder: SOMMER, Oliver, 40593 Düsseldorf (DE); KASPER, Dirk, 40597 Düsseldorf (DE); EISFELD, Heike, 40764 Langenfeld (DE); ZISKOFEN, Peter, 42697 Solingen (DE); MÖLLER, Thomas, 40593 Düsseldorf (DE)
(86) Internationale Anmeldenummer: PCT/EP2011/060617
(87) Internationale Veröffentlichungsnummer: WO 2012/000900

(56) Entgegenhaltungen:
- WO-A2-2009/071699
- FR-A- 1 541 291
- US-A1- 2003 212 213

## Beschreibung

Die Erfindung betrifft einen wässrigen Klebstoff auf Basis von thermoplastischen Blockcopolymeren. Dieser soll nur einen geringen Anteil von Lösemitteln enthalten. Er kann zur Verklebung von Fasern oder Folien eingesetzt werden.

Klebstoffe zum Verkleben von Fasern sind bekannt. Dabei kann es sich um reaktive Klebstoffe handeln oder nicht reaktive Klebstoffe. Als Fasermaterial sind Fasern verschiedener Art bekannt. So ist es beispielsweise bekannt, dass non-woven Substrate mit Klebstoffen gegeneinander oder gegen Kunststofffilme verklebt werden können. Solche Verklebungen werden beispielsweise in der Herstellung für Hygieneprodukte eingesetzt. Bekannt ist es, dass Schmelzklebstoffe auf Basis von reaktiven Polyurethanen eingesetzt werden können, es sind auch flüssige Klebstoffe auf Basis von strahlenvernetzbaren Polymeren bekannt.

Weiterhin ist es bekannt, dass Fasern zu hochfesten Faserverbunden verklebt werden können. Dabei können Fasern vollständig in eine Polymermatrix eingelagert werden. Als Matrixmaterial sind beispielsweise Polyurethane oder Epoxidbindemittel bekannt. In der EP 1161341 werden Verfahren beschrieben, in denen Fasern in Form von Fasersträngen oder Faserngeweben miteinander verklebt werden. Als Klebstoff werden verschiedene Polymere aufgezählt, als Anwendungsform lösemittelhaltige Klebstoffe, Klebstoffpulver, Klebstoffdispersionen. Es wird beispielsweise ein Pulver eines Styrol-Block-Copolymeren eingesetzt und verklebt. Diese Verklebung erfüllt die gestellten Anforderungen in Bezug auf Haftfestigkeit und Elastizität, um diese Fasern durch Verpressen miteinander zu verbinden.

Pulverförmige Klebstoffe haben aber den Nachteil, dass sie die Fasern meist nur punktweise miteinander verkleben. Außerdem müssen sie gut aufschmelzen, um eine gute Haftung zu den Oberflächen zu erzeugen. Eine Alternative ist es, diese Klebstoffe in der Schmelze zu verarbeiten. Das erfordert jedoch einen erheblichen apparativen Aufwand zur Verarbeitung dieser Schmelzen. Außerdem ist durch die hohe Temperatur eine Schädigung des Substrats möglich.

Polymere werden häufig in Lösemitteln hergestellt. Das ermöglicht eine passende Synthese, weiterhin sind daraus hergestellte Klebstoffe gut zu verpacken Und zu transportieren. Diese haben jedoch bei ihrer Applikation den Nachteil, dass erhebliche Mengen an Lösemittel frei werden. Das ist erstens aus umwelttechnischen Gesichtspunkten kritisch, weiterhin müssen auch technische Maßnahmen getroffen werden, um den Arbeitsschutz der Mitarbeiter sicherzustellen. Das erfordert erheblichen Aufwand aus Seiten der Anwender. Deswegen sollen organische Lösemittel bei der Verklebung möglichst vermindert werden.

Weiterhin sind auch die häufig eingesetzten Styrol-Block-Copolymere nicht für alle Anwendungszwecke geeignet. Diese Polymere sind unpolar. Das kann bei verschiedenen Fasermaterialien, die ggf. eine erhöhte Anzahl von polaren Gruppen aufweisen, zu einer nicht ausreichenden Verklebung führen. Es ist zwar möglich, dass die Fasern vor der Verarbeitung vorbehandelt werden. Das sind aber zusätzliche aufwendige Arbeitsschritte.

WO 2009/071699 A2 offenbart ein Verfahren zur Herstellung eines Films oder einer Beschichtung auf festen Substraten durch Applikation einer wässrigen Polymerdispersion. Diese enthält einerseits mindestens ein Blockcopolymer und andererseits mindestens ein Homopolymer und / oder ein Copolymer, in dem die unterschiedlichen Comonomere statistisch verteilt sind. Der Anteil an Blockcopolymer in der wässrigen Dispersion ist nicht näher spezifiziert. In den konkret offenbarten Beispielen wird das Blockcopolymer, bezogen auf die Gesamtmenge der Mischung, in einer Menge von 22,95 Gew.-%, 23,23 Gew.-% bzw. 20,77 Gew.-% eingesetzt.

Aufgabe der vorliegenden Erfindung ist es deswegen wässrige, thermoplastische Klebstoffe auf Basis von Block-Copolymeren bereitzustellen, die nur einen geringen Anteil an Lösemittel enthalten. Dabei sollen diese Klebstoffe eine gute Haftung zu Fasermaterialien aufweisen. Durch den niedrigen Lösemittelgehalt ist die Verarbeitung erleichtert. Durch die Auswahl der Block-Copolymeren ist es möglich gute Klebstoffeigenschaften zu erhalten. Dabei sollen die Polymere geeignete Glasübergangstemperaturen aufweisen, um eine gute Belastbarkeit der Verklebung über einen breiten Temperaturbereich sicherzustellen. Eine weitere Aufgabe ist es, die Lagerstabilität der Klebstoffdispersion zu verbessern.

Die Aufgabe wird gelöst durch eine wässrige Klebstoffdispersion enthaltend 25 bis 70 Gew- % (Meth)Acrylatblockcopolymere und/oder Styrolblockcopolymere die ein zahlenmittleres Molekulargewicht M_{N} von über 15000 g/mol und mindestens zwei unterschiedliche Glasübergangstemperaturen (Tg) aufweisen, wobei eine Glasübergangstemperatur (Tg) oberhalb von 50°C beträgt, die andere Tg unterhalb von +10°C, sowie zusätzlich weitere Additive, wobei die Dispersion weniger als 0,5 Gew-% organische Lösemittel enthält.

Ein weiterer Gegenstand der Erfindung ist ein Verfahren zum Herstellen einer lösemittelfreien Dispersion aus Blockcopolymeren als Sekundärdispersion, wobei die Polymere in organischen Lösemitteln gelöst werden, in eine wässrige Phase überführt werden und anschließend der Lösemittelgehalt durch Destillation vermindert wird.

Als Polymere enthalten die erfindungsgemäßen Dispersionen Blockcopolymere auf Basis von (Meth)Acrylaten oder Styrolderivaten. Die Polymere können linear aufgebaut sein, es können auch Sternpolymere eingesetzt werden. Die Blockcopolymere weisen mindestens zwei unterschiedliche Glasübergangstemperaturen (T_{g}) auf. Eine Tg liegt oberhalb von 50°C, beispielsweise zwischen 50 bis 130°C, insbesondere von 80 bis 120°C, die zweite liegt unterhalb von +10°C, beispielsweise von -60 bis unterhalb +10°C, insbesondere von -45 bis 0°C. Geeignete Polymere enthalten zwei oder mehrere Blöcke, bevorzugt handelt es sich um Diblock oder Triblock -Polymere, insbesondere sollen Gemische enthaltend Di/Triblockpolymere vorliegen.

Eine Ausführungsform setzt Styrolblockcopolymere ein. Es handelt sich dabei um Polymere, die Blockstrukturen aus Styrol oder seinen Derivaten enthalten, z.B. α-Methylstyrol, sowie weitere copolymerisierbare ungesättigte Monomere, wie Ethylen, Propen, Buten, Butadien, Isopren oder ähnliche Monomere. Es soll sich um lineare oder verzweigte Styrol-Blockcopolymere handeln, wobei es sich bei den Copolymeren um alternierende oder Pfropf-Copolymere handelt. Es kann sich um Diblock-Polymere oder Triblock-Polymere handeln, es sind auch mehrere unterschiedliche Blöcke möglich. Es sind beispielsweise thermoplastische Elastomere geeignet, ausgewählt aus Styrolblockcopolymeren, beispielsweise Styrol- und Styrol-Butadien-Copolymere (SBS, SBR), Styrol-Isopren-Copolymere (SIS), Styrol-Ethylen/Butylen -Copolymere (SEBS), Styrol-Ethylen/Propylen-Styrol-Copolymere (SEPS) oder Styrol-Isopren-Butylen-Copolymere (SIBS). Das zahlenmittlere Molekulargewicht M_{N} beträgt mehr als 15000 g/mol. Geeignete Styrolblockpolymere haben zwei Glasübergangstemperaturen T_{g}, wobei eine vorzugsweise über 80°C betragen soll, die andere soll unter 10°C betragen, insbesondere unter 0°C.

Eine andere bevorzugte Ausführungsform der vorliegenden Erfindung setzt (Meth)Acrylatblockcopolymere ein. Es kann sich dabei ist um Diblock-, Triblock- oder Multiblockcopolymere handeln. Die einzelnen Blöcke können auch funktionelle Monomere enthalten, die beispielsweise die Polarität des Polymeren beeinflussen. Bevorzugt kann es sich um Polymere mit enger Molekulargewichtsverteilung handeln. Die Monomere der einzelnen Blöcke werden so gewählt, dass das Polymer eine Glasübergangstemperatur (T_{g}) unter +10°C aufweist, insbesondere unter 0°C, die zweite T_{g} größer als + 50°C, insbesondere oberhalb von 80°C.

Geeignete Monomere sind Ester der Methacrylsäure und der Acrylsäure, wie Alkyl(meth)acrylate von gradkettigen, verzweigten oder cycloaliphatischen Alkoholen mit 1 bis 40 C-Atomen, wie Methyl(meth)acrylat, Ethyl(meth)acrylat n-Butyl(meth)acrylat, i-Butyl(meth)acrylat, t-Butyl(meth)acrylat, 2-Ethylhexyl (meth)acrylat, Cyclohexyl(meth)acrylat; Hydroxyfunktionalisierte (Meth)acrylate, wie 3-Hydroxypropyl(meth)acrylat, 3,4-Dihydroxybutylmono(meth)acrylat, 2-Hydroxyethyl(meth)acrylat, 4-Hydroxybutyl(meth)acrylat, 2-Hydroxypropyl (meth)acrylat, 2,5-Dimethyl-1,6-hexandiolmono(meth)acrylat, besonders bevorzugt 2-Hydroxyethylmethacrylat; Etherhaltige (Meth)acrylate, wie Tetrahydrofurfuryl(meth)acrylat, 1-Butoxypropylmethacrylat, Furfurylmethacrylat, 2-Butoxyethylmethacrylat, 2-Ethoxyethylmethacrylat, Allyloxymethylmethacrylat, T-Ethoxybutytmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den erwähnten (Meth)acrylaten können die zu polymerisierenden Zusammensetzungen auch weitere ungesättigte Monomere aufweisen, die mit den zuvor genannten (Meth)acrylaten copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, Acrylnitril, Vinylester wie z.B. Vinylacetat, Styrol, substituierte Styrole wie α-Methylstyrol und α-Ethylstyrol, Vinyltoluol und p-Methylstyrol; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinyloxolan, Vinylfuran, Vinyloxazole, Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam und Isoprenylether; Maleinsäurederivate, wie beispielsweise Maleinsäureanhydrid, Maleinimid und andere.

Es kann sich dabei beispielsweise um Acrylat / Olefinblockcopolymere handeln, Acrylat / Vinylmonomer- oder bevorzugt um Acrylat / Acrylatblockcopolymere. Insbesondere ist der Block mit hoher T_{g} auf Basis von Methacrylatestern aufgebaut.

Verfahren zur Herstellung der Blockcopolymeren sind bekannt, es kann sich dabei um eine Lösemittelpolymerisation handeln, es können die bekannten Initiatoren eingesetzt werden. Es gibt verschiedene Verfahren, um Blockcopolymere herzustellen. Der Fachmann kann diese nach den einzusetzenden Monomeren auswählen. Sie werden in organischen Lösemitteln oder lösemittelfrei hergestellt. Geeignete Polymere sind in verschiedenen Zusammensetzungen kommerziell erhältlich.

Ein erfindungsgemäßer Klebstoff enthält noch weitere Additive, wie Haftvermittler, Weichmacher, Stabilisatoren, Bakterizide, Klebrigharze, Wachse, Pigmente, Füllstoffe, pH-Wert regelnde Substanzen, Tenside , Emulgatoren, Benetzungsmittel oder Verdicker.

Beispiele für Weichmacher sind medizinische Weißöle, naphtenische Mineralöle, Polypropylen-, Polybuten-, Polyisopren-Oligomere, hydrierte Polyisopren- und/oder Polybutadien-Oligomere, Benzoatester, Phthalatester, Adipinsäureester, Sulfonsäureester, Phosphorsäureester, pflanzliche oder tierische Öle und deren Derivate, Polypropylenglykol, Polybutylenglykol, Polymethylenglykol und ihre Ether. Diese Weichmacher werden vorzugsweise zum Einstellen des Fließverhalten oder der Flexibilität verwendet. Die Menge kann 0 % betragen oder es werden bis zu 15 Gew.% bezogen auf den Klebstofffestkörper eingesetzt.

Es können auch Wachse enthalten sein. Beispielsweise können dem Klebstoff Wachse in Mengen von 0 bis 15 Gew.-% zugegeben werden. Das Wachs kann natürlichen oder synthetischen Ursprungs sein. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse oder Sarsolwachse eingesetzt werden. Als synthetische Wachse finden Polyalkylenwachse sowie Polyethylenglykolwachse Verwendung. Andere geeignete Wachse sind petrochemische Wachse wie Petrolatum, Polyethylenwachse, Polypropylenwachse, Fischer-Tropsch-Wachse, Paraffinwachse oder mikrokristalline Wachse.

Als Stabilisatoren sind Substanzen geeignet, die die Klebstoffe gegen Zersetzung durch Wasser oder Licht schützen. Beispielsweise kann ein erfindungsgemäßer Klebstoff bis zu 3 Gew.-%, vorzugsweise bis 2 Gew.% an Antioxidantien und/oder UV-Stabilisatoren enthalten.

In einer besonderen.Ausführungsform ist die wässrige Klebstoffdispersion frei von Pigmenten oder Füllstoffen.

Als Klebrigharz geeignet sind beispielsweise Kohlenwasserstoffharze, wie Terpenharze, Cumaron-/Inden-Harze; aliphatische petrochemische Harze; Kohlenwasserstoffharze auf Basis ungesättigter CH-Verbindungen oder modifizierte Phenolharze oder Kolophoniumharze und -derivate. Es sind dieses beispielsweise Hydroabietylalkohol und seine Ester, modifizierte Naturharze wie Harzsäuren aus Balsamharz, Tallharz oder Wurzelharz, Kolophonium und seine Derivate, Terpen-Harze oder insbesondere aromatische, aliphatische oder cycloaliphatische Kohlenwasserstoff-Harze, sowie modifizierte oder hydrierte Versionen davon. Die Mengen bezogen auf den Klebstofffestkörper sollen 0% sein, beispielsweise in der Ausführungsform Acrylatcopolymere, oder in einer anderen Ausführungsform bis unterhalb 25 Gew.-% betragen, insbesondere über 10 Gew.-%, beispielsweise in der Ausführungsform mit Styrolcopolymeren.

Die wässrige Klebstoffdispersion kann also zusätzlich mindestens ein synthetisches Harz sowie gegebenenfalls anionische Emulgatoren enthalten.

In einer Ausführungsform wird in der Klebstoffdispersion als Polymer ein Acrylatblockcopolymer eingesetzt und es ist insbesondere kein Harz enthalten.

In einer anderen Ausführungsform wird in der Klebstoffdispersion als Polymer ein Styrolblockcopolymer eingesetzt und es sind insbesondere 10 bis 25 % eines synthetischen Harzes enthalten.

Erfindungsgemäß ist es zweckmäßig, dass der Klebstoff vorzugsweise mindestens einen grenzflächenaktiven Stoff enthält. Darunter werden Stoffe verstanden, die die Grenzflächenspannung zu Wasser herabsetzen, wie Entschäumer, Tenside, Benetzungsmittel. Sie enthalten in der Regel hydrophile und hydrophobe, insbesondere lipophile Gruppen. Ein Teil der grenzflächenaktiven Stoffe kann vor der Dispergierung der Wasserphase oder der gelösten Polymerphase zugesetzt werden. Diese dienen zur Benetzung, zur Vermeidung von Schaum, sowie zur Stabilisierung der allein nicht wasserlöslichen Anteile an Polymeren und Additiven. Es können anionische, nichtionische, kationische oder ampholytische Tenside oder Gemische aus zwei oder mehr davon enthalten sein.

Beispiele für geeignete anionische Tenside sind Alkylsulfate, Alkyl-, Alkylarylether sulfate, wie Alkylphenolether-Sulfate, Fettalkohol-, Fettalkoholether-, Sulfonate, insbesondere Alkylsulfonate, Alkylarylsulfonate, Tauride, Ester und Halbester der Sulfobernsteinsäure, die gegebenenfalls ethoxyliert sein können, Alkali- und Ammoniumsalze von Carbonsäuren, beispielsweise von Fettsäuren, Phosphorsäurepartialester und deren Alkali- und Ammoniumsalze.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze öder Alkylimidazoliumbetaine.

Beispiele für nichtionische Tenside sind Alkylpolyglykolether, Alkylarylpolyglykolether, Fettalkoholpolyglykolether, Fettalkohol-EO/PO-Addukte und Alkylphenol-EO/PO-Addukte, Ethylenoxid/Propylenoxid (EO/PO)-Blockcopolymere, vorzugsweise solche mit etwa 8 bis etwa 50 EO- bzw. PO-Einheiten, Additionsprodukte von Alkylaminen, Fett- und Harzsäuren, Alkylpolyglykoside mit linearen oder verzweigten, gesättigten oder ungesättigten Alkylresten mit im Mittel 8 bis etwa 24 C-Atomen und einem Oligoglykosidrest, Naturstoffe und deren Derivate wie Lecithin, Lanolin oder Sarkosin, polare Gruppen enthaltende lineare Organo(poly)siloxane, insbesondere solche mit Alkoxygruppen mit bis zu 10 C-Atomen und bis zu etwa 50 EO- oder PO-Gruppen.

Alternativ oder zusätzlich kann eine erfindungsgemäße Klebstoffdispersion ein Schutzkolloid enthalten. Es kann sich dabei um anionische öder nicht-ionische Substanzen eingesetzt handeln. Beispiele dafür sind natürliche Polymere, wie Stärkeether und/oder Celluloseether oder deren Derivate, z.B. modifiziert durch Oxidation, Veresterung, Veretherung, sauren Abbau, insbesondere Hydroxyalkyletherstärken, Hydroxyalkylcellulosen, Carboxyalkylcellulosen, Carboxyalkyletherstärken; Dextrine oder Hydroxyalkyldextrine. Diese können einzeln oder im Gemisch eingesetzt werden.

Ebenfalls geeignet sind Polyvinylpyrrolidon oder Polycarbonsäuren, wie Poly-(meth)acrylsäure, gegebenenfalls in Form von Copolymerisaten mit gegebenenfalls OH-Gruppen tragenden Estern der (Meth)acrylsäure oder Polyacrylamid und seine Derivate. Weiterhin kann auch Polyvinylalkohol beispielsweise mit einem Hydrolysegrad zwischen 70 bis 90 % als Schutzkolloid vorhanden sein.

Die Schutzkolloide sollen, gegebenenfalls auch nach Neutralisation, anionisch oder neutral sein. Solche Produkte sind kommerziell erhältlich und können vom Fachmann nach ihren Eigenschaften ausgewählt werden.

Erfindungsgemäß soll die Klebstoffdispersion 0,01 bis 10 Gew.%, bezogen auf den Klebstofffestkörper, Tenside und/oder Schutzkolloide enthalten, insbesondere von 0,1 bis 5 Gew.%.

Die erfindungsgemäße Klebstoffdispersion enthält eine Wasserphase und eine Polymerphase. Nach der Applikation verdunstet die Wasserphase, es entsteht eine feste Klebstoffphase. Erfindungsgemäß ist es notwendig, dass der getrocknete Klebstoff zwei unterschiedliche Glasübergangstemperaturen (Tg) aufweist. Dabei liegt die untere Glasübergangstemperatur des Klebstoffs unterhalb von 10°C, insbesondere unterhalb von 0°C. Die obere Tg ist größer als 50°C, insbesondere größer als 80°C. Die Glasübergangstemperatur wird durch die Auswahl der Polymeren bestimmt. Weiterhin wird sie durch die zusätzlichen Additive, wie Weichmacher oder Klebrigharze beeinflusst.

Eine Ausführungsform eines erfindungsgemäßen Klebstoffs enthält bezogen auf den Klebstofffestkörper 60 bis 90 Gew.-% eines oder mehreren Blockcopolymere, 0 bis 30 Gew.-% Klebrigharze, 0,5 bis 3 % Stabilisatoren sowie 0 bis 15 Gew.-% Emulgatoren oder Schutzkolloide. Dabei soll die Summe der Bestandteile 100 % ergeben. Eine besondere Ausführungsform weist keine Klebrigharze auf, eine andere Ausführungsform enthält 10 bis 25 Gew.-% Klebrigharze, insbesondere synthetische Harze.

Die erfindungsgemäße Klebstoffdispersion ist im Wesentlichen frei von organischen Lösemitteln, das heißt der Gehalt liegt unterhalb von 0,5 Gew.-% (bezogen auf die Dispersion). Der pH-Wert der Dispersion soll zwischen pH 6 bis 10 liegen. Das kann gegebenenfalls auch nachträglich durch Zusatz von Säuren oder Basen eingestellt werden. Eine besonders geeignete Ausführungsform stellt die Klebstoffdispersion als Sekundärdispersion her.

Weiterhin Gegenstand der Erfindung ist ein Verfahren zum Herstellen einer wässrigen Klebstoffdispersion, wobei diese Dispersion nur einen geringen Anteil an organischen Lösemitteln aufweisen soll. Dabei wird das Polymer oder die Polymermischung in einem organischen Lösemittel gelöst. Danach wird eine wässrige, lösemittelhaltige Dispersion erzeugt, die anschließend durch Destillation vom Lösemittel befreit wird.

Das Lösen kann ggf. durch Erwärmen, beispielsweise bis zu 80°C, und Rühren unterstützt werden. Das Lösemittel wird so gewählt, dass es einerseits eine gute lösende Wirkung aufweist, andererseits auch durch Destillation aus der späteren wässrigen Phase entfernt werden kann. Insbesondere sind Lösemittel oder Gemische geeignet, die einen Siedepunkt unter 150°C aufweisen (1013 mbar), bevorzugt zwischen 65 und 130°C. Beispiele dafür sind aromatische inerte Verbindungen, wie Toluol; Kohlenwasserstoffe, wie Cyclohexan; Carbonsäureester, wie Ethylacetat, Butylacetat, Ethylpropionat; Ketone, wie Methylisobutylketon öder Aceton; Alkohole, insbesondere C₁ bis C₅ -Alkohole, wie Ethanol, Butanol, Isopropanol oder tert. Alkylamine. Insbesondere können auch Ester von C₁ bis C₃ Carbonsäuren mit C₁ bis C₆-Alkoholen eingesetzt werden. Dabei können aromatische oder aliphatische Kohlenwasserstoffe als Lösemittel vermieden werden. In diesem Verfahrensschritt können auch zusätzliche Bestandteile und Additive wie Harze, Weichmacher, Stabilisatoren zugesetzt werden. Insbesondere ist es vorteilhaft, dass der organischen Lösung eine ausreichende Menge an Emulgatoren und/oder Schutzkolloiden zugefügt wird.

Weiterhin wird eine wässrige Phase hergestellt, die aus Wasser, Emulgatoren und/oder Entschäumern durch Mischen hergestellt werden kann. Gegebenfalls kann über einen pH-Regulator der pH-Wert der wässrigen Phase eingestellt werden. Es ist auch möglich, alle Zusatzstoffe der Polymerphase zuzumischen.

Anschließend werden beide Phasen vermischt. Das kann beispielsweise so geschehen, dass in eine erwärmte wässrige Phase unter schnellem Rühren die organische Lösung des Bindemittels eingetragen wird. Die Menge der organischen Phase wird so geregelt, dass eine schnelle und gute Dispergierung in der Wasserphase erfolgt. Es wird dann eine Dispersion von organischen Teilchen in Wasser erhalten.

Eine andere Verfahrensweise arbeitet so, dass in einem Mischer gleichzeitig Wasserphase und Polymerphase zusammengeführt werden. Das kann ebenfalls durch Erwärmen der Phasen unterstützt werden. Dabei ist die Größe der dispergierten Teilchen von der eingebrachten Scherkraft abhängig. Gegebenenfalls ist es möglich, eine entsprechende Dispersion mehrmals durch einen Mischer zu führen.

Nach Herstellen der Dispersion wird diese destilliert, bevorzugt im Vakuum. Vakuum und Temperatur der Dispersionsphase werden so gewählt, dass das ausgewählte Lösemittel gut abdestilliert. Es ist zweckmäßig, wenn die Temperatur bei der Destillation unterhalb von 120°C beträgt, insbesondere unterhalb von 70°C. Die Destillation wird so lange durchgeführt, bis das Produkt lösemittelarm ist. Erfindungsgemäß ist der Restlösemittelgehalt der Dispersion kleiner 0,5 Gew-% (bezogen auf die Dispersion). Bei der Destillation kann der Dispersion, falls erforderlich, ein Entschäumer zugesetzt werden. Eine Ausführungsform des Verfahrens setzt keine aromatischen Lösemittel wie Toluol ein.

Um eine ausreichende Stabilität der wässrigen Dispersion sicherzustellen, kann diese danach in ihren Parametern eingestellt werden. Beispielsweise kann durch Zugabe eines pH-Regulators der pH-Wert eingestellt werden. Weiterhin ist es möglich, durch Zugabe von Wasser einen geeigneten Festkörper einzustellen. Ebenso kann die Viskosität durch Zugabe eines Verdickers eingestellt Werden. Weiterhin kann die Dispersion filtriert werden. Dabei werden grobe, schlecht dispergierte Teilchen entfernt.

Die Dispersion soll eine mittlere Teilchengröße von 0,1 bis 10 µm haben, insbesondere kleiner 5 µm. Als mittlere Teilchendurchmesser wird der D50-Wert bestimmt. Der Festkörper einer Dispersion beträgt zwischen 25 und 75 Gew.-%, insbesondere 35 bis 65 Gew.-%. Die Klebstoffdispersion soll bei 25°C eine Viskosität unterhalb von 5000 mPas aufweisen, insbesondere zwischen 200 und 2000 mPas. Es ist bekannt, eine lagerstabile Form mit höherem Festkörper herzustellen, die dann vor der Applikation auf einen geringeren Festkörpergehalt verdünnt wird.

Die erfindungsgemäß hergestellten Dispersionen sind lagerstabil. Es ist kein wesentliches Absetzen von Dispersionsteilchen zu beobachten, ebenso ist die Teilchengröße über einen längeren Zeitraum konstant. Die erfindungsgemäßen Dispersionen sind praktisch lösemittelfrei. Sie haben eine niedrige Viskosität und können in dünner Schicht und geringen Mengen auf geeignete Substrate aufgebracht werden.

Ein weiterer Gegenstand der Erfindung ist die Verwendung der oben beschriebenen Klebstoffdispersionen zum Verkleben von faserförmigen Substraten. Als Substrate sind beispielsweise bekannte faserförmige Substrate geeignet. Es kann sich dabei um non-woven Substrate handeln, es kann sich um Faserbündel wie rovings handeln, es können auch Fasergewebe beschichtet werden. Als Fasern können die für Faserverbundwerkstoffe bekannten Fasern eingesetzt werden. Es kann sich dabei um Glasfasern, Quartzfasern, Kohlefasern, Polyesterfasern, Polyolefinfasern, Polyaramidfasern oder Polyacrylnitrilfasern handeln. Die Fasern können nach Anwendungszweck ausgewählt werden. Ebenso ist es bekannt, dass eine geeignete Form der Fasern entsprechend den mechanischen Anforderungen der hergestellten Substrate ausgewählt wird. Die Fasern können gerichtet verklebt werden oder es werden mehrere Schichten untereinander verschieden ausgerichtet verklebt. Weiterhin ist es bekannt, solche Fasern mit anderen Substraten, wie (Verbund-)Folien oder Keramikplatten, zu verkleben. Solche Fasern in Verbundwerkstoffen werden beispielsweise im Flugzeugbau, im Wohnungsbau, im Fahrzeugbau für Flügel von Windkraftrotoren oder für andere mechanisch hoch belastete Bauteile eingesetzt. In einem anderen Anwendungsgebiet können auch Vliessubstrate untereinander oder mit Folien verklebt werden, wobei die verklebten Produkte danach weiterhin flexibel bleiben können.

Die erfindungsgemäßen Klebstoffdispersionen können auf verschiedene Art und Weise auf die Substrate aufgetragen werden. Beispielsweise ist es möglich, dass die entsprechenden Fasern, Gewebe oder Vliesteile durch Sprühauftrag mit den Klebstoffdispersionen versehen werden. Eine andere Auftragsform tränkt die Faserwerkstoffe mit dem Klebstoff. Eine andere Ausführungsform der Erfindung beschichtet die Fasermaterialien an der Oberfläche, in dem die Fasermaterialien durch eine wässrige Dispersion des Klebstoffs geführt werden. Eine andere Ausführungsform trägt den Klebstoff so auf, dass nur Anteile der Fasern beschichtet werden, diese also nur in einzelnen Bereichen verklebt werden. Entsprechend der Arbeitsweise ist es möglich, die auf das Fasermaterial aufgetragenen Klebstoffe zu trocknen. Das kann beispielsweise durch Erwärmen und durch Abführen der flüchtigen Bestandteile erzielt werden. Dabei kann das Verdunsten der flüchtigen Anteile durch Erwärmen von Trägermaterialien erleichtert werden, weiterhin ist es möglich, durch Aufblasen von trockenen Gasen oder erwärmten Gasen das Wasser und andere flüchtige Bestandteile auszutreiben. Es entstehen so vorbeschichtete Materialien, die eine trockene Oberfläche aufweisen. Diese sind an und für sich nicht klebrig und können als Zwischenprodukte gelagert werden.

Gemäß einer Ausführungsform können aus diesen Zwischenprodukten dann Verbundmaterialien hergestellt werden. Dabei werden die beschichteten Fasermaterialien konfektioniert und in eine passende Form gebracht. Anschließend ist es möglich, durch Anwendung von Druck und Wärme den thermoplastischen Klebstoff und die Faser miteinander zu verbinden. Die Temperatur ist von den Substraten abhängig, diese sollen nicht geschädigt werden. Beispielsweise kann die Temperatur unter 200°C betragen, bevorzugt unter 140°C, insbesondere unter 100°C. Dabei entsteht eine Vielzahl von Klebstellen in dem verklebten Fasermaterial, die zusammen ein formstabiles Substrat ergeben. Die Form der Substrate kann weiterhin in Grenzen gewählt werden. Sie sind im Prinzip von dem Anwendungsgebiet der hergestellten verklebten Formteile abhängig.

Eine weitere Ausführungsform setzt die Klebstoffdispersionen als Siegelklebstoff ein. Dabei wird die später zu versiegelnde Fläche eines Verpackungsmaterials mit einem erfindungsgemäßen Klebstoff beschichtet und getrocknet. Die Schicht ist später unter Druck gegen eine andere Schicht siegelbar und kann eine Verpackungsnaht bilden. Das kann als heat seal Verfahren oder auch als cold seal Verfahren durchgeführt werden. Durch die erfindungsgemäße Arbeitsweise kann ein Erhitzen der zu verklebenden Flächen vermindert werden, empfindliche Substrate werden geschont.

Eine andere Verwendung der erfindungsgemäßen Klebstoffe ist das Verkleben von flexiblen Fasersubstraten mit flexiblen Folien zu Verbundwerkstoffen. Diese können dann als Funktionswerkstoff in der Textilindustrie eingesetzt werden. Für diesen Anwendungsfall sind eher niedrige Temperaturen zur Aktivierung des Klebstoffs geeignet.

Durch die erfindungsgemäßen Dispersionen werden niedrigviskose Klebstoffe bereitgestellt. Eine Applikation auf den verschiedenen Fasermaterialien kann beispielsweise in dünner Schicht erfolgen. Weiterhin ist der verwendete Klebstoff lösemittelfrei. Auch bei der Verarbeitung und späteren Erwärmung werden keine gesundheitsgefährdenden organischen Lösemittel oder andere organische flüchtige Substanzen freigesetzt. Dabei können die Anforderungen an zusätzliche Maßnahmen zum Arbeitsschutz verringert werden. Weiterhin ist eine Schädigung der Substrate durch Quellen der Oberfläche vermindert.

Durch die Auswahl der Polymeren als Blockcopolymere wird sichergestellt, dass die verklebten Substrate eine hohe mechanische Belastung aushalten. Sie weisen eine hohe Flexibilität auf, aber auch bei höherer Temperatur ist noch eine stabile Verklebung gegeben. Da es sich um thermoplastische Materialien handelt, können verklebte Werkstoffe, bei einer Temperaturerhöhung eine mechanische Verformung aushalten. Auch in der Anwendungsform als Siegelbeschichtung ist eine gute Haftung auf den Substraten festzustellen. Das Verschließen der Verpackungen kann bei niedriger Temperatur stattfinden, sodass die verpackten Gegenstände oder die Folien nicht unnötig einer Temperaturbelastung ausgesetzt werden.

Messmethoden der Erfindung:
Glasübergangstemperaturen Tg: gemessen mit DSC
Festkörper: gemessen nach DIN 53189 bei 105°C
Viskosität: gemessen nach Brookfield, EN ISO 2555, 25°C
Teilchengröße: gemessen mit dem Prinzip der Lichtstreuung; der D50-Wert ist der Wert, bei dem 50 Vol-% der Partikel kleiner ist als der angegebene Wert, gemessen auf einem Coulter Counter.
Molekulargewicht: Zahlenmittleres Molekulargewicht (M_{N}), über GPC gegen Styrolstandard bestimmbar.

### Beispiel 1

### Sekundärdispersion mit Styrolblockcopolymer

### Bestandteile:

| | | |
|---|---|---|
| Styrolblockcopolymer | 144 g | (M_{N} ca. 210000 g/mol) |
| hydriertes Kohlenwasserstoffharz | 47 g | |
| Irganox 1010 | 5 g | (Stabilisator) |
| Isopropanol | 80 g | |
| Toluol | 705 g | |
| Wasser | 529 g | |
| Anionischer Emulgator | 4,1 g | |
| Nicht-ionischer Emulgator | 7,9 g | |

Das Blockcopolymer und Lösemittel werden unter Rühren und Erwärmen auf 75°C gelöst. Danach werden die Harze, der Stabilisator und der nicht-ionische Emulgator zugegeben und unter ständigem Rühren homogenisiert.

Aus Wasser und dem anionischen Emulgator wird eine wässrige Lösung hergestellt und auf eine Temperatur von ca. 75°C erwärmt.

Die wässrige Phase wird vorgelegt und in einem Rotor-Statormischer gemischt. Dabei wird zügig die ca. 80°C warme Polymerphase zugesetzt und homogenisiert. Nach ca. 2 min. maximaler Rührgeschwindigkeit ist die Emulsion vollständig hergestellt. Bei Bedarf kann noch ein geringer Anteil eines Entschäumers der Dispersion zugesetzt werden.

Die entsprechende Emulsion wird in der Wärme in eine Glasapparatur überführt, die einen Rührer und einen Destillationsaufsatz aufweist. Es wird ein Unterdruck von ca. 450 mbar angelegt und die Dispersion unter Rühren aufgeheizt. Bei einer Temperatur von ca. 50°C wird das Lösemittel abdestilliert. Die Destillation wird beendet, wenn der Lösemittelgehalt kleiner 0,5 % beträgt.
Danach wird die Lösung filtriert.

| | |
|---|---|
| mittlere Teilchengröße | 1,5 µm |
| Festkörper | 40 bis 43 % |
| pH-Wert | 9 |
| Viskosität ca. | 300 mPas (25°C, Spindel 2) |

### Beispiel 2

### Sekundärdispersion mit Acrylatblockcopolymer

### Bestandteile:

| | | |
|---|---|---|
| Acrylatblockcopolymer | 190 g | (Methylmethacrylat, Butylacrylat, T_{g} 100-120°C Tg ca. -45°C) |
| nicht ionischer Emulgator | 8 g | |
| Irganox 1010 | 5 g | |
| Ethylacetat | 790 g | |
| Wasser | 520 | |
| NaOH | ca. | 0,6 g |
| anionischer Emulgator | | 11,7 g |

Es wird nach dem Verfahren gemäß Beispiel 1 gearbeitet. Dabei wird aber das nichtionische Tensid der Polymerphase zugesetzt, das anionische Tensid der Wasserphase. Nach dem Filtrieren wird bei Bedarf mit einem Verdicker die Viskosität eingestellt.

| | |
|---|---|
| Festkörper | 43 bis 45 Gew.-% |
| pH-Wert | 8 |
| mittlere Teilchengröße | 0,5 µm |
| Viskosität ca. 300 mPas (25°C, Spindel 2) | |

### Beispiel 3

### Sekundärdispersion mit Acrylatblockcopolymer

### Bestandteile:

| | |
|---|---|
| Acrylatblockcopolymer | 171 g |
| Kolophonium Harz | 29 g |
| Nicht ionischer Emulgator | 8 g |
| Irganox 1010 | 5 g |
| Ethylacetat | 790 g |
| Wasser | 520 |
| NaOH | ca. 0,6 g |
| anionischer Emulgator | 11,7 g |

Es wird nach dem Verfahren von Beispiel 2 gearbeitet. Anschließend wird der Dispersion ein Verdicker zugesetzt.

| | |
|---|---|
| Verdicker | 30,5 g |
| Festkörper | 41 bis 44 Gew.-% |
| pH-Wert | 8 |
| mittlere Teilchengröße | 0,5 µm |
| Viskosität ca. 300 mPas | |

## Patentansprüche

1. Wässrige Klebstoffdispersion enthaltend 25 bis 70 Gew- % (Meth)Acrylatblockcopolymere und/oder Styrolblockcopolymere, die ein zahlenmittleres Molekulargewicht M_{N} von über 15000 g/mol und mindestens zwei unterschiedlichen Glasübergangstemperaturen aufweisen, wobei eine Glasübergangstemperatur (Tg) oberhalb von 50 °C beträgt, die andere Glasübergangstemperatur unterhalb von +10°C, sowie zusätzlich weitere Additive, wobei die Dispersion weniger als 0,5 Gew-%, bezogen auf die Dispersion, organische Lösemittel enthält.

2. Klebstoffdispersion nach Anspruch 1, **dadurch gekennzeichnet, dass** das Blockcopolymer polare Gruppen enthält.

3. Klebstoffdispersion nach einem der Ansprüche 1 oder 2, **dadurch gekennzeichnet, dass** die Dispersion zusätzlich mindestens ein synthetisches Harz enthält sowie gegebenenfalls anionische Emulgatoren.

4. Klebstoffdispersion nach einem der Ansprüche 1 bis 3, **dadurch gekennzeichnet, dass** die Dispersion einen mittleren Teilchendurchmesser (Dso) von 0,1 µm bis 10 µm aufweist.

5. Klebstoffdispersion nach einem der Ansprüche 1 bis 4, **dadurch gekennzeichnet, dass** die Dispersion frei von Pigmenten oder Füllstoffen ist.

6. Klebstoffdispersion nach einem der Ansprüche 1 bis 5, **dadurch gekennzeichnet, dass** als Polymer ein Acrylatblockcopolymer eingesetzt wird und insbesondere kein Harz enthalten ist.

7. Klebstoffdispersion nach einem der Ansprüche 1 bis 6 **dadurch gekennzeichnet, dass** als Polymer ein Styrolblockcopolymer eingesetzt wird und insbesondere 10 bis 25 % eines synthetischen Harzes enthalten sind.

8. Verfahren zum Herstellen einer Klebstoffdispersion nach Anspruch 1 bis 7, **dadurch gekennzeichnet, dass** die Dispersion hergestellt wird durch Herstellen einer Lösung der Blockcopolymere zusammen mit Harzen und/oder Additiven in organischen Lösemitteln, dispergieren der Polymerlösung in einer wässrigen Phase, die gegebenenfalls Neutralisationsmittel, Emulgatoren und/oder Entschäumer enthalten kann, Abdestillieren des Lösemittels, gegebenenfalls im Vakuum, wobei als organische Lösemittel aromatische Lösemittel, Ketone, C₁ bis C₅-Alkohole, Ester aus C₁ bis C₆-Alkoholen mit C₁ bis C₃ Carbonsäuren, Kohlenwasserstoffe eingesetzt werden mit einem Siedepunkt unterhalb von 150°C.

9. Verfahren nach Anspruch 8, **dadurch gekennzeichnet, dass** das Lösemittelgemisch frei von aromatischen oder aliphatischen Kohlenwasserstoffen ist.

10. Verfahren nach Anspruch 8 bis 9, **dadurch gekennzeichnet, dass** die Destillation unter Vakuum bei einer Temperatur unter 120 °C durchgeführt wird.

11. Verwendung einer Klebstoffdispersion nach einem der Ansprüche 1 bis 7 zum Verkleben von Fasern und Faserwerkstoffen.

12. Verwendung einer Klebstoffdispersion nach einem der Ansprüche 1 bis 7 zum Beschichten von Kunststofffolien und anschließendem Verkleben mit weiteren Substraten.

13. Verwendung nach Anspruch 11 oder 12 wobei die Fasern, Faserwerkstoffe oder Kunststofffolien mit der Klebstoffdispersion beschichtet und danach getrocknet werden zu einem Zwischenprodukt mit einer durch Wärme verklebbaren Klebstoffschicht.

14. Verwendung nach Anspruch 13 wobei die beschichteten Substrate unter Pressen und Erwärmen zu Verbunden verklebt werden.

## Claims

1. An aqueous adhesive dispersion, comprising 25 to 70 wt.% (meth)acrylate block copolymers and/or styrene block copolymers having a number average molecular weight M_{N} of more than 15,000 g/mole and at least two different glass transition temperatures, wherein one glass transition temperature (Tg) is above 50°C, and the other glass transition temperature is below +10°C, and additionally comprising further additives, the dispersion comprising less than 0.5 wt.% organic solvent, based on the dispersion.

2. The adhesive dispersion according to claim 1, **characterized in that** the block copolymer comprises polar groups.

3. The adhesive dispersion according to one of claims 1 to 2, **characterized in that** the dispersion additionally comprises at least one synthetic resin and optionally anionic emulsifiers.

4. The adhesive dispersion according to one of claims 1 to 3, **characterized in that** the dispersion has a mean particle diameter (D₅₀) of 0.1 µm to 10 µm.

5. The adhesive dispersion according to one of claims 1 to 4, **characterized in that** the dispersion is free of pigments or fillers.

6. The adhesive dispersion according to one of claims 1 to 5, **characterized in that** an acrylate block copolymer is used as the polymer, and in particular no resin is present.

7. The adhesive dispersion according to one of claims 1 to 6, **characterized in that** a styrene block copolymer is used as the polymer, and in particular 10 to 25% of a synthetic resin is present.

8. A method for producing an adhesive dispersion according to claims 1 to 7, **characterized in that** the dispersion is produced by producing a solution of the block copolymers, together with resins and/or additives in organic solvents, dispersing the polymer solution in an aqueous phase, which may optionally comprise neutralizing agents, emulsifiers and/or defoaming agents, distilling off the solvent, optionally under vacuum, the organic solvents used being aromatic solvents, ketones, C₁ to C₅ alcohols, esters from C₁ to C₆ alcohols with C₁ to C₃ carboxylic acids, and hydrocarbons, having a boiling point below 150°C.

9. The method according to claim 8, **characterized in that** the solvent mixture is free of aromatic or aliphatic hydrocarbons.

10. The method according to claims 8 to 9, **characterized in that** the distillation is carried out under vacuum at a temperature below 120°C.

11. Use of an adhesive dispersion according to one of claims 1 to 7 for bonding fibers and fiber materials.

12. Use of an adhesive dispersion according to one of claims 1 to 7 for coating plastic films and subsequent bonding to further substrates.

13. Use according to claim 11 or 12, wherein the fibers, fiber materials or plastic films are coated with the adhesive dispersion and subsequently dried to form an intermediate having an adhesive layer that can be bonded by heat.

14. Use according to claim 13, wherein the coated substrates are bonded by way of pressing and heating to form composites.

## Revendications

1. Dispersion d'adhésif aqueuse comprenant 25 à 70% en poids de copolymères à blocs de (méth)acrylate et/ou de copolymères à blocs de styrène qui ont un poids moléculaire moyen M_{N} de plus de 15000 g/mole et au moins deux températures de transition vitreuse différentes, une température de transition vitreuse (Tg) étant supérieure à 50°C, l'autre température de transition vitreuse étant inférieure à +10°C, et en outre d'autres additifs, la dispersion contenant moins de 0,5% en poids de solvant organique, par rapport à la dispersion.

2. Dispersion d'adhésif selon la revendication 1, **caractérisée en ce que** le copolymère à blocs contient des groupes polaires.

3. Dispersion d'adhésif selon l'une des revendications 1 ou 2, **caractérisée en ce que** la dispersion contient en outre au moins une résine synthétique et éventuellement des émulsifiants anioniques.

4. Dispersion d'adhésif selon l'une des revendications 1 à 3, **caractérisée en ce que** la dispersion a un diamètre de particule médian (D₅₀) de 0,1 µm à 10 µm.

5. Dispersion d'adhésif selon l'une des revendications 1 à 4, **caractérisée en ce que** la dispersion est exempte de pigments ou de charges.

6. Dispersion d'adhésif selon l'une des revendications 1 à 5, **caractérisée en ce que** le polymère utilisé est un copolymère à blocs d'acrylate et ne contient en particulier aucune résine.

7. Dispersion d'adhésif selon l'une des revendications 1 à 6, **caractérisée en ce que** le polymère utilisé est un copolymère à blocs de styrène et contient en particulier 10 à 25% de résine synthétique.

8. Procédé de production d'une dispersion d'adhésif selon les revendications 1 à 7, **caractérisé en ce que** l'obtient la dispersion en préparant une solution de copolymères à blocs conjointement avec des résines et/ou des additifs dans des solvants organiques, en dispersant la solution de polymères dans une phase aqueuse, qui peut éventuellement contenir des agents de neutralisation, des émulsifiants et/ou des agents anti-moussants, en éliminant le solvant par distillation, éventuellement sous vide, où sont utilisés comme solvants organiques des solvants aromatiques, des cétones, des alcools en C₁ à C₅, des esters d'alcools en C₁ à C₆ avec des acides carboxyliques en C₁ à C₃, des hydrocarbures avec un point d'ébullition inférieure à 150°C.

9. Procédé selon la revendication 8, **caractérisé en ce que** le mélange de solvants est exempt d'hydrocarbures aromatiques ou aliphatiques.

10. Procédé selon les revendications 8 à 9, **caractérisé en ce que** la distillation est effectuée sous vide à une température inférieure à 120°C.

11. Utilisation d'une dispersion d'adhésif selon l'une des revendications 1 à 7 pour le collage de fibres et de matières fibreuses.

12. Utilisation d'une dispersion d'adhésif selon l'une des revendications 1 à 7 pour le revêtement de films de matière plastique puis le collage à d'autres substrats.

13. Utilisation selon la revendication 11 ou 12, dans laquelle les fibres, les matières fibreuses ou les films de matière plastique sont revêtus de la dispersion d'adhésif puis séchés pour former un produit intermédiaire possédant une couche d'adhésif pouvant être collée à la chaleur.

14. Utilisation selon la revendication 13, dans laquelle les substrats revêtus sont collés à des composites par pressage et chauffage.
